(19) Europäisches Patentamt
European Patent Office
Office européen des brevets

(11) **EP 4 656 665 A1**

(12) **EUROPEAN PATENT APPLICATION**
published in accordance with Art. 153(4) EPC

(43) Date of publication:
**03.12.2025 Bulletin 2025/49**

(21) Application number: **23918636.4**

(22) Date of filing: **21.12.2023**

(51) International Patent Classification (IPC):
*C08G 63/181* (2006.01)    *B65D 23/08* (2006.01)
*C09D 167/02* (2006.01)

(52) Cooperative Patent Classification (CPC):
**B65D 23/08; C08G 63/181; C09D 167/02**

(86) International application number:
**PCT/JP2023/045868**

(87) International publication number:
**WO 2024/157682 (02.08.2024 Gazette 2024/31)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **26.01.2023 JP 2023010494**

(71) Applicant: **TOYOBO MC Corporation
Osaka-shi, Osaka 530-0001 (JP)**

(72) Inventors:
• **MIEDA, Hiroyuki
Otsu-shi, Shiga 520-0292 (JP)**
• **SUGIMOTO, Kanta
Otsu-shi, Shiga 520-0292 (JP)**
• **HAMANO, Masami
Otsu-shi, Shiga 520-0292 (JP)**
• **MIKAMI, Tadahiko
Otsu-shi, Shiga 520-0292 (JP)**

(74) Representative: **Müller-Boré & Partner
Patentanwälte PartG mbB
Friedenheimer Brücke 21
80639 München (DE)**

(54) **CRYSTALLINE POLYESTER RESIN, COATING COMPOSITION, COATING FILM AND METAL CAN**

(57)    An object of the present invention is to provide a crystalline polyester resin that contains no curing agent and thus excludes a harmful substance such as bisphenol A and formaldehyde, that has excellent solvent solubility, and that is capable of forming a coating film having excellent properties such as processability and retort resistance; a coating material composition containing the crystalline polyester resin; a coating film; and a metal can. A crystalline polyester resin containing a polycarboxylic acid component and a polyalcohol component as copolymerization components, wherein the crystalline polyester resin contains 4 to 48 mol% of orthophthalic acid as the polycarboxylic acid component, and 48 mol% or more of 1,4-butanediol and less than 40 mol% of ethylene glycol as the polyalcohol component, and wherein the crystalline polyester resin has a melting point of 120 to 160°C.

EP 4 656 665 A1

# EP 4 656 665 A1

## Description

### Technical Field

The present invention relates to a crystalline polyester resin. In detail, the present invention relates to a crystalline polyester resin suitable for a coating for cans, in more detail a crystalline polyester resin suitable for covering cans housing beverages and food (hereinafter, collectively called "food and drink"), and to a coating composition that contains the crystalline polyester resin, a coating film, and a metal can that has the coating film.

### Background Art

Metal cans such as a beverage can and a food can are coated with an organic resin so as to prevent corrosion of metal (corrosion resistance) caused by food and so as not to impair flavor and taste of the contents (flavor properties). On a coating film formed by this coating, high-load processing such as necking and threading is performed in a step of forming a metal top portion of a bottle can. Accordingly, the coating film is required to have resistance to such post processing (processability). The coating film is further required to have adhesiveness to a metal material, curing properties, and the like. Further, the coating film is, in some cases, exposed to high-temperature and high-humidity conditions of retort sterilization or the like, depending on the use thereof. Even in such cases, the coating film is required not only to maintain adhesiveness to a metal material but also to cause no whitening (retort resistance).

Conventionally, as a coating having the corrosion resistance and the flavor properties and tolerating a can forming process, widely used are epoxy-based coatings such as an epoxy phenolic coating, an epoxy-amino-based coating, and an epoxy acrylic coating; polyester-based coatings such as a polyester phenolic coating, a polyester-amino-based coating, and polyester-isocyanate-based coating; and vinyl chloride-based coatings. Recent study, however, reports possibility that bisphenol A that is a raw material for epoxy resins affects estrogen action and brains of fetuses and infants. The vinyl chloride-based coatings also have a problem of a stabilizer and a problem of generating dioxin in incineration. Formaldehyde that is used as a raw material for phenolic resins, amino resins, and the like and remains in the coating is known to have harmful effects on human bodies, such as carcinogenic properties, and adversely affect the flavor properties of the contents. Similarly, an isocyanate resin is known to have harmful effects on human bodies, such as carcinogenic properties.

Due to concerns about various adverse effects on human bodies, a coating that is not based on these raw materials is desired in the market, but the circumstances are that a coating that has performance satisfactory enough for application to cans has not been obtained.

From such a viewpoint, for example, Patent Document 1 proposes a resin composition, for coating a can, which contains a crystalline polyester and thereby does not need any curing agent.

### Prior Art Document

### Patent Document

Patent Document 1: Japanese Patent Application Laid-Open (JP-A) No. 2001-234115

### Disclosure of the Invention

### Problem that the Invention is to Solve

However, the coating film formed of the resin composition, for coating a can, described in Patent Document 1 contains a great amount of an amorphous polyester resin, together with the crystalline polyester resin. This is for complementing low solvent solubility of the crystalline polyester resin. However, such a composition has been found to have lowered retort resistance.

An object of the present invention is to provide a crystalline polyester resin that contains no curing agent and thus excludes a harmful substance such as bisphenol A and formaldehyde, that has excellent solvent solubility, and that is capable of forming a coating film having excellent properties such as processability and retort resistance; a coating material composition containing the crystalline polyester resin; a coating film; and a metal can.

### Means for Solving the Problem

On the basis of an idea that in order to obtain, from singly a crystalline polyester resin, a coating film that satisfies the retort resistance as well as the processability and to make the crystalline polyester resin satisfy solvent solubility when formed into a coating, the inventors of the present invention thought that it would be necessary to partially break molecular planarity and symmetry while maintaining a certain degree of crystallinity. On the basis of such thought, the inventors of the present invention have found a specific composition and melting point of a polyester resin. That is, the present invention comprises the following aspects.

(1) A crystalline polyester resin containing a polycarboxylic acid component and a polyalcohol component as copolymerization components, wherein the crystalline polyester resin contains 4 to 48 mol% of orthophthalic acid as the polycarboxylic acid component, and 48 mol% or more of 1,4-butanediol and less than 40 mol% of ethylene glycol as the polyalcohol component, and wherein the crystalline polyester resin has a melting point of 120 to 160°C.

(2) The crystalline polyester resin according to (1), wherein when values of copolymerization proportions (mol%) of components are plugged into a formula described below, provided that each of a total of the polycarboxylic acid component and a total of the polyalcohol component is defined as 100 mol%, a value of the formula is 95 mol% or more and less than 140 mol%.

(1,4-butanediol + component (a)) - (orthophthalic acid + component (b) + component (c))　　　　　Formula:

(wherein, the component (a) is a dicarboxylic acid having a ring structure, and having a carboxylic acid group at para positions when the ring is a benzene ring, at 2,6-positions when the ring is a naphthalene ring, and at 1,4-positions when the ring is a cyclohexyl ring,
the component (b) is a dicarboxylic acid, except for the component (a), having a ring structure, and
the component (c) is an aliphatic polyalcohol having a side chain, and
the components (a), (b), and (c) are each an optional component.)

(3) A coating composition containing the crystalline polyester resin according to (1) or (2), wherein the coating composition has a content of a curing agent of less than 1 part by mass, relative to 100 parts by mass (solid content) of the crystalline polyester resin.
(4) A coating film containing the crystalline polyester resin according to (1) or (2).
(5) A metal can having the coating film according to (4).

Effects of the Invention

The crystalline polyester resin of the present invention has a prescribed composition and therefore is capable of, without containing any curing agent, having excellent solvent solubility, and forming a coating film that has excellent properties such as processability and retort resistance, and thus capable of excluding a harmful substance such as bisphenol A and formaldehyde. Therefore, the crystalline polyester resin of the present invention is suitable for a coating composition used for beverage cans and food cans, a coating film, and a metal can.

Mode for Carrying Out the Invention

As hereunder, an embodiment of the present invention will be explained in detail.

<Crystalline polyester resin>

The crystalline polyester resin) of the present invention has a chemical structure that can be obtained from a polycondensation product of a polycarboxylic acid and a polyalcohol, wherein the polycarboxylic acid and the polyalcohol each contains one or two or more selected components.
A polycarboxylic acid component used in the present invention contains orthophthalic acid. By using the polycarboxylic acid component containing orthophthalic acid as a part thereof, the obtained crystalline polyester resin has the symmetry thereof appropriately broken, thus improving the solvent solubility. In addition, the obtained crystalline polyester resin has a main chain extending in the identical direction from carboxylic acids respectively positioned at the ortho positions, thus promoting appropriate orientation and easily maintaining crystallinity. Therefore, the coating film has good retort resistance.
When the total amount of the polycarboxylic acid component is defined as 100 mol%, the copolymerization proportion of the orthophthalic acid needs to be 4 to 48 mol%. The copolymerization proportion of the orthophthalic acid is preferably 5 to 45 mol%, more preferably 10 to 44 mol%, further preferably 20 to 43 mol%, and particularly preferably 30 to 42 mol%. By setting the copolymerization proportion of the orthophthalic acid to 4 mol% or more, the obtained polyester has improved solvent solubility. By setting the copolymerization proportion of the orthophthalic acid to 48 mol% or less, the obtained polyester has increased crystallinity and the coating film has good retort resistance.

A polycarboxylic acid component, other than the orthophthalic acid, used in the present invention is not particularly limited, and, for example, polycarboxylic acids or esters thereof, and anhydrides thereof described below can be used.

As to the polycarboxylic acid component, other than the orthophthalic acid, used in the present invention, it is possible to use a dicarboxylic acid (a) (hereinafter, referred to as a "component (a)") having a ring structure, and having a carboxylic acid group at the para positions when the ring is a benzene ring, at the 2,6-positions when the ring is a naphthalene ring, and at the 1,4-positions when the ring is a cyclohexyl ring. The carboxylic acid group of the component (a) is preferred to be directly bonded to the ring structure. Examples of the component (a) include terephthalic acid, 2,6-naphthalenedicarboxylic acid, and 1,4-cyclohexanedicarboxylic acid. One or two or more thereof can be used.

The polycarboxylic acid component used in the present invention preferably contains the component (a). By using the polycarboxylic acid component containing the component (a), the polyester resin has increased crystallinity and the coating film has excellent retort resistance. More preferred is a dicarboxylic acid having a benzene ring as the ring structure and having a carboxylic acid group at the para positions, or a dicarboxylic acid having a naphthalene ring as the ring structure and having a carboxylic acid group at the 2,6-positions, because these dicarboxylic acids have less steric hindrance and particularly high crystallinity among examples of the component (a). Further preferred is a dicarboxylic acid having a benzene ring as the ring structure and having a carboxylic acid group at the para positions because this dicarboxylic acid has structurally further less steric hindrance.

When the component (a) is used as the polycarboxylic acid component, the copolymerization proportion of the orthophthalic acid in the polycarboxylic acid component is preferably lower than the copolymerization proportion of the component (a).

When the total amount of the polycarboxylic acid component is defined as 100 mol%, the copolymerization proportion (mol%) of the component (a) is preferably 40 to 95 mol%, more preferably 45 to 90 mol%, and further preferably 50 to 80 mol%. By setting the copolymerization proportion of the component (a) to 40 mol% or more, the polyester resin has increased crystallinity and the coating film improves the retort resistance. By setting the copolymerization proportion of the component (a) to 95 mol% or less, the obtained polyester has good solvent solubility.

Examples of the polycarboxylic acid component, other than the orthophthalic acid, used in the present invention include a dicarboxylic acid (b) (hereinafter, referred to as a "component (b)"), except for the component (a), having a ring structure. The ring structure of the component (b) is preferably a benzene ring, a furan ring, a naphthalene ring, or a cyclohexyl ring. A carboxylic acid group of the component (b) is preferred to be directly bonded to the ring structure. Examples of the component (b) include isophthalic acid, 1,2-naphthalenedicarboxylic acid, 1,3-naphthalenedicarboxylic acid, 1,4-naphthalenedicarboxylic acid, 1,5-naphthalenedicarboxylic acid, 1,6-naphthalenedicarboxylic acid, 1,7-naphthalenedicarboxylic acid, 1,8-naphthalenedicarboxylic acid, 2,3-naphthalenedicarboxylic acid, 2,7-naphthalenedicarboxylic acid, sodium 5-sulfoisophthalate, 2,5-furandicarboxylic acid, 1,2-cyclohexanedicarboxylic acid, 1,3-cyclohexanedicarboxylic acid, and hexahydrophthalic acid. One or two or more thereof can be used.

The component (b) is an optional component. When the total amount of the polycarboxylic acid component is defined as 100 mol%, the copolymerization proportion of the component (b) is preferably 20 mol% or less, more preferably 15 mol% or less, and further preferably 10 mol% or less, and may be even 0 mol%. By setting the copolymerization proportion of the component (b) to 20 mol% or less, the obtained polyester has good retort resistance.

When the component (b) is used, the total of the copolymerization proportions (mol%) of the orthophthalic acid and the component (b) is preferably 15 to 50 mol%, more preferably 20 to 45 mol%, and further preferably 30 to 45 mol%, provided that the total amount of the polycarboxylic acid component is defined as 100 mol%. By setting the total of the copolymerization proportions of the orthophthalic acid and the component (b) to 15 mol% or more, the obtained polyester has improved solvent solubility. By setting the total of the copolymerization proportions of the orthophthalic acid and the component (b) to 50 mol% or less, the obtained polyester has improved retort resistance.

As to the polycarboxylic acid component, other than the orthophthalic acid, used in the present invention, an aliphatic polycarboxylic acid, an alicyclic polycarboxylic acid, an aromatic polycarboxylic acid, or the like, other than the component (a) or (b) can also be used. Examples of the aliphatic polycarboxylic acid include fumaric acid, adipic acid, sebacic acid, malonic acid, and succinic acid. Examples of the alicyclic polycarboxylic acid and the aromatic polycarboxylic acid include tri- or more functional carboxylic acids. One or two or more thereof can be used.

The polyalcohol component used in the present invention contains 1,4-butanediol. The straight-chain structure and the alkyl chain length of the 1,4-butanediol contribute to the solvent solubility, and high crystallinity that satisfies the retort resistance and the processability.

When the total amount of the polyalcohol component is defined as 100 mol%, the copolymerization proportion of the 1,4-butanediol needs to be 48 mol% or more. The copolymerization proportion of the 1,4-butanediol is preferably 50 mol% or more, more preferably 60 mol% or more, further preferably 70 mol% or more, particularly preferably 80 mol% or more, and furthermore particularly preferably 90 mol% or more, and may be even 100 mol%. By setting the copolymerization proportion of the 1,4-butanediol to 48 mol% or more, the obtained polyester has increased crystallinity and has good retort resistance and processability.

When the total amount of the polyalcohol component is defined as 100 mol%, the copolymerization proportion of the ethylene glycol needs to be less than 40 mol%. The copolymerization proportion of the ethylene glycol is preferably less than 30 mol%, more preferably less than 20 mol%, and further preferably less than 10 mol%, and may be even 0 mol%. By setting the copolymerization proportion of the ethylene glycol to less than 40 mol%, the obtained polyester has good solvent solubility and processability.

A polyalcohol component, other than the 1,4-butanediol, used in the present invention is not particularly limited, and specific examples of the polyalcohol component include a polyalcohol (c) (hereinafter, referred to as a "component (c)") having a side chain. The component (c) is preferably a diol having a side chain. The side chain of the component (c) refers to an atom or group of atoms branched from a main chain containing a hydrocarbon group (carbon chain) connecting two hydroxyl groups. The side chain of the component (c) is preferably an alkyl group. The alkyl group has preferably 1 to 50 carbon atoms, more preferably 2 to 40 carbon atoms, and further preferably 3 to 35 carbon atoms. The component (c) may have one side chain or two or more side chains, and may have preferably five or less side chains, more preferably four or less side chains, and further preferably three or less side chains. The alkyl group may be a straight chain or may have a side chain. Examples of the component (c) include 1,2-propylene glycol, 1,2-butanediol, 1,3-butanediol, 2-methyl-1,3-propanediol, neopentyl glycol, 3-methyl-1,5-pentanediol, 2-methyl-1,3-hexanediol, 2-methyl-2-ethyl-1,3-propanediol, 2,2-diethyl-1,3-propanediol, 2-ethyl-2-n-propyl-1,3-propanediol, 2,2-di-n-propyl-1,3-propanediol, 2-n-butyl-2-ethyl-1,3-propanediol, 2,2-di-n-butyl-1,3-propanediol, 2,4-diethyl-1,5-pentanediol, 2-ethyl-1,3-hexanediol, mannitol, sorbitol, dimer diol, polypropylene glycol, and pentaerythritol. One or two or more thereof may be used as the component (c).

The component (c) is an optional component. When the total amount of the polyalcohol component is defined as 100 mol%, the copolymerization proportion of the component (c) is preferably 20 mol% or less, more preferably 15 mol% or less, and further preferably 10 mol% or less, and may be even 0 mol%. By setting the copolymerization proportion of the component (c) to 20 mol% or less, the obtained polyester can achieve both the solvent solubility and the retort resistance.

Examples of the polyalcohol component, other than the 1,4-butanediol and the ethylene glycol, used in the present invention include a polyalcohol (d) (hereinafter, referred to as a "component (d)") having a straight-chain structure. Examples of the component (d) include 1,3-propylene glycol, 1,5-pentanediol, 1,6-hexanediol, and 1,8-octanediol, and one or two or more thereof can be used.

The component (d) is an optional component. When the total amount of the polyalcohol component is defined as 100 mol%, the copolymerization proportion of the component (d) is preferably 20 mol% or less, more preferably 15 mol% or less, and further preferably 10 mol% or less, and may be even 0 mol%. By setting the copolymerization proportion of the component (d) to 20 mol% or less, the obtained polyester can achieve both the solvent solubility and the retort resistance.

Examples of the polyalcohol component, other than the 1,4-butanediol, used in the present invention include a polyalcohol (e) (hereinafter, referred to as a "component (e)") having an aromatic ring skeleton or an alicyclic skeleton. Examples of the component (e) include 1,4-cyclohexanedimethanol, tricyclodecanedimethanol, hydroquinone, catechol, and resorcinol, and one or two or more thereof can be used.

The component (e) is an optional component. When the total amount of the polyalcohol component is defined as 100 mol%, the copolymerization proportion of the component (e) is preferably 30 mol% or less, more preferably 20 mol% or less, and further preferably 10 mol% or less, and may be even 0 mol%. By setting the copolymerization proportion of the component (e) to 30 mol% or less, the obtained polyester can achieve both the solvent solubility and the retort resistance.

When isosorbide is used as the polyalcohol component, other than the 1,4-butanediol, used in the present invention, the copolymerization proportion of the isosorbide is preferably less than 5 mol%, more preferably less than 1 mol%. Most preferably, the polyalcohol component does not contain any isosorbide. By setting the copolymerization proportion of the isosorbide to less than 5 mol%, the obtained polyester can improve the solvent solubility and the retort resistance.

The copolymerization proportions (mol%) in the crystalline polyester resin of the present invention are preferably set so that when the values of copolymerization proportions (mol%) of components are plugged into a formula described below, provided that each of the total of the polycarboxylic acid component and the total of the polyalcohol component is defined as 100 mol%, the value of the formula is 95 mol% or more and less than 140 mol%.

Formula: (1,4-butanediol (mol%) + component (a) (mol%)) - (orthophthalic acid (mol%) + component (b) (mol%) + component (c) (mol%))    Fromula:

By setting the value to a value in the above range, the crystalline polyester resin has particularly good solvent solubility and the coating film has particularly good processability and retort resistance. For further improvement of the performance, the value is more preferably 98 mol% or more, further preferably 100 mol% or more, and especially preferably 110 mol% or more. The value is more preferably 135 mol% or less, further preferably 130 mol% or less, and especially preferably 120 mol% or less.

As to the polycarboxylic acid component and the polyalcohol component that constitute the crystalline polyester resin in the present invention, a raw material derived from a biomass resource can be used. The biomass resource includes, for example: something in the form of starch, cellulose, or the like into which sunlight energy is converted by plant photosynthesis and which stores the sunlight energy; animals that grow by eating plants; and products obtained by processing plants and animals. More preferred among these biomass resources is a plant resource, and examples of the plant resource include wood, rice straw, rice hull, rice bran, old rice, corn, sugar cane, cassava, sago palms, tofu refuse, corn cobs, tapioca refuse, bagasse, vegetable oil refuse, potatoes, buckwheat, soybeans, oils and fats, waste paper, papermaking residues, marine product residues, livestock wastes, sludge, and food wastes. Corn, sugar cane, cassava, and sago palms are more preferable.

Specific examples of a polycarboxylic acid raw material derived from a biomass resource include adipic acid, sebacic acid, fumaric acid, itaconic acid, terephthalic acid, and 2,5-furandicarboxylic acid. These may be used singly or in a mixture of two or more thereof.

Specific examples of a polyalcohol raw material derived from a biomass resource include ethylene glycol, 1,2-propylene glycol, 1,3-propylene glycol, neopentyl glycol, 1,4-butanediol, and 1,4-cyclohexanedimethanol. These may be used singly or in a mixture of two or more thereof.

The crystalline polyester resin in the present invention preferably has a branched structure. Having a branched structure refers to having a branched structure in the main chain of polyester. For introducing a branched structure into the polyester, there is, for example, a method for copolymerizing a trifunctional or higher-functional component as part of the polycarboxylic acid component and/or the polyalcohol component in a polycondensation reaction of polyester. As to a trifunctional or higher-functional polycarboxylic acid component, polycarboxylic acids or esters thereof, and polycarboxylic anhydrides described below can be used. Specifically, examples thereof include trimellitic acid, pyromellitic acid, and benzophenonetetracarboxylic acid. Examples of a trifunctional or higher-functional polyalcohol component include glycerine, trimethylolethane, trimethylolpropane, mannitol, sorbitol, and pentaerythritol. One or two or more thereof can be used. When the crystalline polyester resin has a branched structure, the obtained coating film has good processability.

The trifunctional or higher-functional polycarboxylic acid component and/or the trifunctional or higher-functional polyalcohol component are/is preferably 0.1 mol% or more, more preferably 0.5 mol% or more, and further more preferably 1 mol% or more, to the total crystalline polyester resin defined as 100 mol%. The trifunctional or higher-functional polycarboxylic acid component and/or the trifunctional or higher-functional polyalcohol component are/is preferably 5 mol% or less, more preferably 3 mol% or less, further more preferably 2 mol% or less, and particularly preferably 1.5 mol% or less, to the total crystalline polyester resin defined as 100 mol%. When the trifunctional or higher-functional polycarboxylic acid component and/or the trifunctional or higher-functional polyalcohol component are/is each more than the above range, crystallinity of the crystalline polyester resin decreases, resulting in a deterioration of retort resistance or gelation generated during polymerization of polyester.

The acid value of the crystalline polyester resin in the present invention can be imparted by any method. Examples of a method for imparting an acid value include a method for adding and reacting a compound having a polycarboxylic anhydride group in a molecule thereof in a late stage of polycondensation, and a method for forming a high-acid-value prepolymer (oligomer), and next subjecting the prepolymer to polycondensation so as to give a polyester resin having an acid value. Due to easiness of operation and easiness of obtaining a target acid value, the former adding and reacting method is preferable.

Among the compounds for imparting an acid value to the crystalline polyester resin in the present invention and having a polycarboxylic anhydride group in a molecule thereof, examples of a carboxylic monoanhydride include phthalic anhydride, succinic anhydride, maleic anhydride, trimellitic anhydride, itaconic anhydride, and citraconic anhydride. One or two or more can be selected from among these examples and used. Among these examples, trimellitic anhydride is preferable from the aspect of versatility and economic efficiency.

Among the compounds for imparting an acid value to the crystalline polyester resin in the present invention and having a polycarboxylic anhydride group in a molecule thereof, examples of a carboxylic polyanhydride include pyromellitic anhydride, 1,2,3,4-butanetetracarboxylic dianhydride, 1,2,3,4-pentanetetracarboxylic dianhydride, 3,3',4,4'-benzophenonetetracarboxylic dianhydride, 2,3,6,7-naphthalenetetracarboxylic dianhydride, ethylene glycol bistrimellitate dianhydride, and 2,2',3,3'-biphenyltetracarboxylic dianhydride. One or two or more can be selected from among these examples and used. Among these examples, ethylene glycol bistrimellitate dianhydride is preferable from the aspect of versatility and economic efficiency.

As to the compounds for imparting an acid value and having a polycarboxylic anhydride group in a molecule thereof, a carboxylic monoanhydride and carboxylic polyanhydride can be used singly or in combination.

The acid value of crystalline polyester resin in the present invention is preferably 400 eq/ton or less, more preferably 300 eq/ton or less, and further preferably 200 eq/ton or less, and may be even 0 eq/ton. By setting an acid value of the above upper limit value or less, the obtained crystalline polyester resin can have high molecular weight, and therefore has good processability.

The concentration of a metal sulfonate salt in the crystalline polyester resin in the present invention is preferably less than 50 eq/t, more preferably 20 eq/tg or less, further preferably 10 eq/tg or less, particularly preferably 5 eq/tg or less. By setting the concentration of a metal sulfonate salt to less than 50 eq/tg, the obtained polyester has lowered hydrophilicity and the retort resistance is improved.

Next, a method for producing the crystalline polyester resin of the present invention is described. In an esterification/exchange reaction, all the monomer components and/or low polymers thereof are heated and melted, and thus reacted. The esterification/exchange temperature is preferably 180 to 250°C, and more preferably 200 to 250°C. The reaction time is preferably 1.5 to 10 hours, and more preferably 3 to 6 hours. The reaction time is a time from reaching a desired reaction temperature until the following polycondensation reaction. In the polycondensation reaction, a polyalcohol component is distilled away under reduced pressure at a temperature of 220 to 280°C from an esterified product obtained by the esterification reaction, and the polycondensation reaction is progressed until reaching a desired molecular weight. The polycondensation reaction temperature is preferably 220 to 280°C, and more preferably 240 to 275°C. The degree of decompression is preferably 130 Pa or less. An insufficient degree of decompression tends to prolong the polycondensation time and is therefore not preferable. The pressure is preferred to be gradually reduced over 30 to 180 minutes that are the decompression time from atmospheric pressure to reaching 130 Pa or less.

In the esterification/exchange reaction and the polycondensation reaction, polymerization is performed using as necessary an organic titanate compound such as tetrabutyl titanate, germanium dioxide, antimony oxide, and an organic tin compound such as tin octylate. An organic titanate compound is preferable from the aspect of reaction activity, and germanium dioxide is preferable from the aspect of coloring of resin.

The crystalline polyester resin in the present invention has a glass transition temperature of preferably 10°C or more, and more preferably 15°C or more, in terms of water resistance, particularly retort resistance of the coating film. In terms of processability, the glass transition temperature is preferably 50°C or less, and more preferably 40°C or less.

The melting point (Tm) of the crystalline polyester resin in the present invention is a temperature at the top of an endothermic peak having the greatest heat of fusion in a heating process performed by heating the polyester resin from -50 to 200°C at 20°C/min, with use of a differential scanning calorimeter (DSC), after subjecting the polyester resin to an aging treatment at 100°C for 30 hours. The range of the melting point (Tm) of the crystalline polyester resin in the present invention is 120 to 160°C, preferably 125 to 155°C, more preferably 130 to 150°C, and further preferably 135 to 145°C. By setting the melting point to 120°C or higher, the crystallinity becomes good and excellent retort resistance can be exhibited. By setting the melting point to 160°C or lower, excellent processability and solvent solubility can be exhibited.

In the present invention, a crystalline polyester resin refers to a polyester resin which exhibits a melting point (Tm) when the polyester resin is measured under the above conditions. The polyester resin having a high crystallinity has a high melting point.

The crystalline polyester resin of the present invention has a reduced viscosity of preferably 0.2 to 0.8 dl/g, more preferably 0.4 to 0.8 dl/g, and further preferably 0.6 to 0.8 dl/g. When the crystalline polyester resin (A) has a reduced viscosity of 0.2 dl/g or more, the coating film has good toughness and processability. On the other hand, when the crystalline polyester resin (A) has a reduced viscosity of 0.8 dl/g or less, the crystalline polyester resin has good solvent solubility.

The coating composition of the present invention contains at least the crystalline polyester resin described above and an organic solvent. The coating composition contains, as a main agent, the crystalline polyester resin. In the coating composition, the "main agent" is defined as a component contained in the highest content (mass proportion) among the solid components forming a coating film (non-volatile components except volatile substances such as water and the organic solvent), in the coating composition.

The coating composition of the present invention is capable of forming a coating film by containing singly the crystalline polyester resin, without having a curing agent blended therein. Therefore, the coating composition of the present invention preferably contains substantially no curing agent. That is, the content of a curing agent is preferably less than 1 part by mass (in terms of solid content) relative to 100 parts by mass (in terms of solid content) of the crystalline polyester resin.

The content of the curing agent in the coating composition of the present invention is preferably less than 1 part by mass relative to 100 parts by mass (solid content) of the crystalline polyester resin. The content of the curing agent is more preferably less than 0.5 part by mass, and further more preferably less than 0.1 part by mass. Most preferably, no curing agent is contained. When the content of the curing agent is more than the above range, the coating composition may not only has poor economic efficiency but may also possibly have low processability caused by a self condensation reaction of the curing agent, generate a harmful outgas such as a volatile of a blocking agent and formaldehyde, and have poor long storage stability.

Here, the curing agent refers to any known curing agent that reacts with the polyester resin and thus forms a crosslinking structure. Examples of a form of the crosslinking structure include: a reaction of generating an intermolecular carbon-carbon bond by reacting an unsaturated double bond in the polyester resin through a radical addition reaction, a cationic addition reaction, an anionic addition reaction, or the like; and formation of an intermolecular bond through a condensation reaction, a polyaddition reaction, a transesterification reaction, or the like with a polyvalent carboxylic acid group or a polyhydric alcohol group in the polyester resin. Examples of the curing agent include a phenolic resin, an amino resin, an isocyanate compound, an epoxy compound, a $\beta$-hydroxylamide compound, and an unsaturated bond-containing resin.

The coating composition of the present invention can, according to the required properties, have blended thereto a known inorganic pigment such as titanium oxide and silica, phosphoric acid and an esterified product thereof, or a known additive such as a surface smoothing agent, a defoamer, a dispersant, and a lubricant, crystal nucleus agent, and a plasticizer. In particular a lubricant is important so as to impart lubricity of the coating film needed at a time of forming a DI can, a DR (or DRD) can, or the like. Suitable examples of the lubricant include a fatty acid ester wax that is an esterified product of a polyol compound and a fatty acid, a silicon-based wax, a fluorine-based wax, a polyolefin wax such as polyethylene, a lanolin-based wax, a montan wax, and a microcrystalline wax. These lubricants can be used singly or in a mixture of two or more thereof.

Examples of the organic solvent used for the coating composition of the present invention include toluene, xylene, ethyl acetate, butyl acetate, methyl ethyl ketone, methyl isobutyl ketone, cyclohexanone, isophorone, methyl cellosolve, butyl cellosolve, ethylene glycol monoethyl ether acetate, diethylene glycol monoethyl ether acetate, ethylene glycol monoacetate, methanol, ethanol, butanol, ethylene glycol monoethyl ether, ethylene glycol monobutyl ether, diethylene glycol monobutyl ether, and Solvesso. At least one compound is selected from among these examples and used in consideration of solubility, evaporation rate, and the like.

The coating composition of the present invention can also have blended thereto other resin for the purpose of modification such as imparting of flexibility and adhesion of the coating film. Examples of the other resin include amorphous polyester, crystalline polyester, an ethylene-polymerizable unsaturated carboxylic acid copolymer, and an ethylene-polymerizable carboxylic acid copolymer ionomer. By blending at least one resin selected from these examples, the flexibility and/or the adhesion of the coating film can sometimes be imparted.

The crystalline polyester resin of the present invention can be formed into a powder coating by a known crushing method. Examples of the known crushing method include a crushing technique. In the crushing technique, a mixture of the polyester resin composition of the present invention, and a rust-preventive pigment and an additive as necessary, and the like is dry-mixed by a mixer such as a tumbler mixer and a Henschel mixer, and melt-kneaded by a kneader. As to the kneader, a general kneader can be used such as a single-screw or twin-screw extruder, a three-roll mill, and Labo plastomill. The kneaded product is cooled and solidified and the solidified product is roughly crushed and finely crushed so as to give a crushed product. Examples of a crusher include a jet crusher that performs crushing using a supersonic jet stream, and an impact crusher that introduces a solidified product into a space formed between a high-speed rotating rotator (rotor) and a stator (liner) and crushes the solidified product. The crushed product may have further added thereto an additive as necessary. By classifying the crushed product, the powder is adjusted to have a desired particle size and a desired particle size distribution, and thus a powder coating composition can be obtained. The powder coating composition does not contain any organic solvent. For the classification, a known classifier can be used that is capable of removing excessively crushed toner mother particles through centrifugal or pneumatic classification. For example, a swivel pneumatic classifier (rotary pneumatic classifier) or the like can be used.

The crystalline polyester resin of the present invention can be dispersed in an aqueous medium by a known dispersing method and used as a crystalline polyester resin aqueous dispersion. Examples of the known method include a dispersing method using an emulsifier.

The coating composition of the present invention can be applied to a metal plate by a known coating method such as roll coater coating and spray coating. The coating film thickness is not particularly limited, but the dried film thickness is preferably in a range of 3 to 18 $\mu$m, and more preferably in a range of 5 to 15 $\mu$m. The conditions for baking the coating film are usually a temperature range of about 160 to 260°C and a time of about 1 minute to 2 hours, and more preferably a temperature range of about 180 to 240°C and a time of about 1 minute to 1 hour.

The coating film formed of the crystalline polyester resin of the present invention is preferably subjected to an aging treatment after baked in the range described above. By performing the aging treatment, the crystallization in the coating film is further progressed and has good retort resistance.

The crystalline polyester resin of the present invention can be subjected to melt extrusion coating performed by a known method. Examples of the known method include a T-die method. In the T-die method, using an extruder(s) corresponding to the number of the crystalline polyester resin of the present invention and other types of resins used as necessary, the polyester(s) can be extruded through a die(s) onto a metal substrate and heat-bonded thereto so as to achieve extrusion coating and thus form a film. The melt extrusion coating has an advantage of being able to omit a step of forming the polyester resin into a coating material, and a drying step, and thus improving the productivity.

The coating film of the present invention is one (two layers of a substrate/the crystalline polyester resin) formed by coating a substrate with the crystalline polyester resin. The coating film may have a structure obtained by laying a layer formed of other resin on or beneath the crystalline polyester resin layer. In that case, the layer formed of other resin means a coating layer. The coating film of the present invention can be obtained by stacking the crystalline polyester resin of the present invention on any one of various substrates in accordance with an ordinary method, and further stacking other resin layer.

The metal can of the present invention has the coating film. The metal can can be obtained by applying to one surface or both surfaces, or an edge surface as necessary of any metal plate that can be used for cans for, for example, beverages and canned products, lids and caps of the cans, and the like, and that are made from a metal material. Examples of the metal material include tinplate, tin free steel, and aluminum. The metal plates made from these metal materials may be used after preliminarily subjected to a phosphoric acid treatment, a chromic acid chromate treatment, a phosphoric acid chromate treatment, an anticorrosion treatment with other rust-preventive treatment agent, or a surface treatment performed for the purpose of improving the adhesion of the coating film. Examples

As hereunder, the present invention will be more specifically illustrated by referring to Examples although the present invention is not limited to those Examples. Evaluations of various properties were carried out in accordance with the following methods. The unit simply represented by "part" means "part by mass", and "%" means "mass%".

<Crystalline polyester resin>

(1) Measurement of resin composition

A sample of the crystalline polyester resin was dissolved in deuterated chloroform and subjected to 1H-NMR analysis using nuclear magnetic resonance (NMR) apparatus 400-MR manufactured by Varian Inc. The mole ratio between components was obtained from the ratio of integral values in the analysis.

(2) Measurement of reduced viscosity (unit: dl/g)

A sample (0.1 g) of the crystalline polyester resin was dissolved in 25 cc of a phenol/tetrachloroethane (mass ratio 6/4) mixed solvent, and the reduced viscosity was measured at 30°C using an Ubbelohde's viscometer.

(3) Measurement of melting point (Tm) and glass transition temperature (Tg)

The measurement was performed using differential scanning calorimeter (DSC) DSC-220 manufactured by Seiko Instruments Inc. A crystalline polyester resin was subjected to an aging treatment, with the aging treatment conditions set to 100°C × 30 hours. A sample (5 mg) of the treated crystalline polyester resin was hermetically sealed in an aluminum container with a lid. A nitrogen gas was flowed thereinto at 30 ml/min to form a nitrogen atmosphere. Then, the sample was cooled to -50°C using liquid nitrogen and next heated to 200°C at 20°C/min. The temperature at the top of the maximum peak of heat of fusion obtained through this process was determined as the melting point (Tm, unit: °C). On the other hand, a sample was, using the measuring device, heated to 200°C under the same conditions, then rapidly cooled to -50°C, and heated again to 200°C at 20°C/min. On the endothermic curve obtained through this process, the temperature at the intersection of the base line before an endothermic peak and the tangent line approaching the endothermic peak was defined as the glass transition temperature (Tg, unit: °C).

(4) Measurement of acid value

A sample (0.2 g) of the crystalline polyester resin was dissolved in 40 ml of chloroform and titrated with a 0.01 N ethanol solution of potassium hydroxide so as to obtain the equivalent per $10^6$ g (eq/ton) of the polyester resin. Phenolphthalein was used as an indicator.

(5) Evaluation of solvent solubility

A crystalline polyester resin (2 g) was dissolved in 8 g of cyclohexanone and heated (left to stand still) at 100°C for 3 hours. The dissolution state of the crystalline polyester resin was observed by visual inspection and determined as follows.

(Determination)

∞: Almost all the resin dissolved (80% or more dissolved)
o: A slight amount of the resin left undissolved (70% or more dissolved)
∆: A small amount of the resin left undissolved (60% or more dissolved)
✕: Left undissolved (less than 50%)

<Preparation of crystalline polyester resin coating composition>

A crystalline polyester resin in an amount of 100 parts by mass (solid content) was dissolved in cyclohexanone, and a crystalline polyester resin coating composition (about 10 mass% of solid content) was thus obtained.

<Preparation of test piece>

The crystalline polyester resin coating composition was applied to one surface of tinplate (JIS G 3303 (2008) SPTE, 70 mm × 150 mm × 0.3 mm) with a bar coater such that the dried film thickness was 10 ± 2 μm, and baked under the baking conditions of 200°C for 30 seconds. The resultant product was used as a test piece (hereinafter, called a "test piece").

(6) Evaluation of processability

The processability was evaluated by subjecting the obtained test piece to bending performed at 180° in the direction in which the coating film came outside, and measuring the energization value which reflects a degree of a crack generated in the bent portion of the coating film. The bending was performed with nothing held in the bent portion (so-called 0T). An aluminum sheet electrode (width 20 mm, depth 50 mm, thickness 0.5 mm) was prepared on which a sponge (width 20 mm, depth 50 mm, thickness 10 mm) having been immersed in a 1% aqueous solution of NaCl was placed. A location around the center of the bent portion of the test piece was brought into contact with the sponge in parallel with the 20-mm side of the sponge. A direct-current voltage (5.0 V) was applied between the aluminum sheet electrode and the non-coated portion of the rear surface of the test piece, and the energization value was measured. A smaller energization value means better bending properties.

(Determination)

oo: less than 0.5 mA
∘ : 0.5 mA or more and less than 1.0 mA
Δ : 1.0 mA or more and less than 2.0 mA
× : 2.0 mA or more

(7) Evaluation of retort resistance

The test piece was placed in a standing position in a stainless steel cup, into which ion-exchanged water was poured to the half height of the test piece. The stainless steel cup was set in a pressure vessel of a retort tester (ES-315 manufactured by TOMY KOGYO CO., LTD.) and a retort treatment was performed at 125°C for 30 minutes. The evaluation of the retort resistance after the treatment was conducted for the vapor contact portion of the coating film that is generally considered to be exposed to severer conditions. The whitening and the blister state of the cured film were determined by visual inspection according to the following criteria.

(Determination)

oo: good (without whitening and blister)
o: slight whitening but no blister
Δ : some degree of whitening and/or some blisters
× : remarkable degree of whitening and/or remarkable blisters

Synthetic Example (1) of crystalline polyester resin

Into a 3-L four-neck flask were charged 105 parts by mass of dimethyl 2,6-naphthalenedicarboxylate, 130 parts by mass of 1,2-propylene glycol, 505 parts by mass of 1,4-butanediol, 150 parts by mass of 1,4-cyclohexanedimethanol, and 0.4 part by mass (0.03 mol% relative to the total acid components) of tetra-n-butyl titanate (hereinafter, sometimes abbreviated as TBT) as a catalyst, and the mixture was gradually heated to 240°C over 3 hours and thus subjected to a transesterification reaction. Next, the mixture was cooled to 160°C, had charged thereinto 535 parts by mass of terephthalic acid, 70 parts by mass of isophthalic acid, and 35 parts by mass of orthophthalic acid, and was gradually heated to 240°C over 3 hours and thus subjected to an esterification reaction. After the completion of the esterification reaction, the system was gradually decompressed to 10 mmHg over 1 hour and polymerized under reduced pressure, and heated to a temperature of 250°C and further subjected to late-stage polymerization under vacuum at 1 mmHg or less for 90 minutes. When being reached to the target molecular weight, a resultant product was extracted and a crystalline polyester resin (Synthetic Example (1)) was thus obtained. The obtained crystalline polyester resin had a reduced viscosity of 0.75 dl/g, a glass transition temperature (Tg) of 40°C, a crystalline melting point (Tm) of 135°C, and an acid value of 3 eq/ton.

Synthetic Examples (2) to (15)

Polyester resins of Synthetic Examples (3), (4), (5), (10), (13), (14), and (15) were produced by performing a transesterification method in the same manner as in Synthetic Example (1), but changing the charging composition, so that the polyester resins had the resin compositions shown in Table 1. Polyester resins of the synthetic examples other than the above were produced by a direct polymerization method (the transesterification reaction step in Synthetic Example (1) was omitted) so as to have the resin compositions shown in Table 1.

[Table 1]

| | | | Synthetic Example | 1 | 2 | 3 | 4 | 5 | 6 | 7 | 8 |
|---|---|---|---|---|---|---|---|---|---|---|---|
| resin composition | polycarboxylic acid component (mol%) | component (a) | terephthalic acid | 75 | 55 | 80 | 65 | 75 | 49 | 59 | 59 |
| | | | 2,6-naphthalenedicarboxylic acid | 10 | | 5 | 10 | 5 | | | |
| | | other component | adipic acid | | | | | | 10 | | |
| | | component (b) | isophthalic acid | 10 | | | 15 | | | | |
| | | essential component | orthophthalic acid | 5 | 45 | 15 | 10 | 20 | 40 | 40 | 40 |
| | | branched component | trimellitic anhydride | | | | | | 1 | 1 | 1 |
| | | after-added | trimellitic anhydride | | | | | | | | 1 |
| | | | ethylene glycol bistrimellitate dianhydride | | | | | | | | 1 |
| | polyalcohol component (mol%) | essential component | 1,4-butanediol | 60 | 100 | 50 | 80 | 70 | 100 | 100 | 100 |
| | | other component | ethylene glycol | | | | | 30 | | | |
| | | component (c) | 1,2-propylene glycol | 10 | | 20 | | | | | |
| | | component (e) | 1,4-cyclohexanedimethanol | 30 | | 30 | 20 | | | | |
| | Formula: (1,4-butanediol + component (a)) − (orthophthalic acid + component (b) + component (c)) | | | 120 | 110 | 100 | 130 | 130 | 109 | 119 | 119 |
| resin properties | | | reduced viscosity (dl/g) | 0.75 | 0.75 | 0.75 | 0.75 | 0.75 | 0.75 | 0.75 | 0.60 |
| | | | acid value (eq/ton) | 3 | 3 | 3 | 3 | 3 | 3 | 3 | 240 |
| | | | Tg (°C) | 40 | 10 | 40 | 35 | 40 | 10 | 15 | 15 |
| | | | Tm (°C) | 135 | 125 | 125 | 155 | 140 | 150 | 145 | 140 |

| | | | Synthetic Example | 9 | 10 | 11 | 12 | 13 | 14 | 15 |
|---|---|---|---|---|---|---|---|---|---|---|
| resin composition | polycarboxylic acid component (mol%) | component (a) | terephthalic acid | 59 | 75 | 55 | 40 | 80 | 80 | 70 |
| | | | 2,6-naphthalenedicarboxylic acid | | 10 | | | 5 | 5 | 10 |
| | | other component | adipic acid | | | | | | | |
| | | component (b) | isophthalic acid | | 15 | 45 | | | | 10 |
| | | essential component | orthophthalic acid | 40 | | | 60 | 15 | 15 | 10 |
| | | branched component | trimellitic anhydride | 1 | | | | | | |
| | | after-added | trimellitic anhydride | | | | | | | |
| | | | ethylene glycol bistrimellitate dianhydride | | | | | | | |
| | polyalcohol component (mol%) | essential component | 1,4-butanediol | 80 | 60 | 100 | 100 | 45 | 55 | 90 |
| | | other component | ethylene glycol | | | | | | 45 | |
| | | component (c) | 1,2-propylene glycol | | 10 | | | 25 | | |
| | | component (e) | 1,4-cyclohexanedimethanol | 20 | 30 | | | 30 | | 10 |
| Formula: (1,4-butanediol + component (a)) – (orthophthalic acid + component (b) + component (c)) | | | | 99 | 120 | 110 | 80 | 90 | 125 | 150 |
| resin properties | | | reduced viscosity (dl/g) | 0.75 | 0.75 | 0.75 | 0.75 | 0.75 | 0.75 | 0.75 |
| | | | acid value (eq/ton) | 3 | 3 | 3 | 3 | 3 | 3 | 3 |
| | | | Tg (°C) | 30 | 40 | 10 | 10 | 40 | 45 | 35 |
| | | | Tm (°C) | 135 | 125 | - | 110 | 115 | 135 | 165 |

The crystalline polyester resin coating compositions were prepared by using the obtained crystalline polyester resins. The solvent solubility, the processability and the retort resistance were evaluated.

[Table 2]

| item | | | Example | | | | | | | | |
|---|---|---|---|---|---|---|---|---|---|---|---|
| | | | 1 | 2 | 3 | 4 | 5 | 6 | 7 | 8 | 9 |
| resin | | crystalline polyester resin (Synthetic Example No.) | 1 | 2 | 3 | 4 | 5 | 6 | 7 | 8 | 9 |
| | | crystalline polyester resin (parts by mass) | 100 | 100 | 100 | 100 | 100 | 100 | 100 | 100 | 100 |
| evaluation | | solvent solubility | Δ | ○○ | ○○ | Δ | ○ | ○ | ○○ | ○○ | ○○ |
| | | processability | ○○ | ○○ | ○○ | Δ | ○ | ○○ | ○○ | ○○ | ○○ |
| | | retort resistance | ○○ | ○ | ○ | ○○ | ○○ | ○ | ○○ | ○○ | ○○ |

[Table 3]

| item | | Comparative Example | | | | | |
|---|---|---|---|---|---|---|---|
| | | 1 | 2 | 3 | 4 | 5 | 6 |
| resin | crystalline polyester resin (Synthetic Example No.) | 10 | 11 | 12 | 13 | 14 | 15 |
| | crystalline polyester resin (parts by mass) | 100 | 100 | 100 | 100 | 100 | 100 |
| evaluation | solvent solubility | × | ○○ | ○○ | ○○ | × | × |
| | processability | ○○ | ○○ | ○○ | ○○ | × | × |
| | retort resistance | ○ | × | × | × | ○○ | ○○ |

As is clear from Table 2, in Examples 1 to 9, the coating films obtained from the crystalline polyester resins of the present invention are excellent in all of the solvent solubility, the processability, and the retort resistance. On the other hand, as shown in Table 3, in Comparative Examples 1 and 2, the crystalline polyester resin did not contain orthophthalic acid as the polycarboxylic acid component and therefore had poor solvent solubility. In Comparative Example 3, the copolymerization proportion of orthophthalic acid in the polycarboxylic acid component was high, lowering the melting point of the crystalline polyester resin, and therefore the retort resistance was poor. In Comparative Example 4, the copolymerization proportion of 1,4-butanediol in the polyalcohol component was low, lowering the melting point of the crystalline polyester resin, and therefore the retort resistance was poor. In Comparative Example 5, the copolymerization proportion of ethylene glycol in the polyalcohol component was high, making the crystalline polyester resin have poor solvent solubility and processability. In Comparative Example 6, the crystalline polyester resin had a high melting point and thus poor solvent solubility and processability.

Industrial Applicability

The product of the present invention relates to a crystalline polyester resin that has excellent solvent solubility, processability, and retort resistance, and to a coating composition and a coating film that contain the resin. The present invention is suitable as a main agent of a coating applied to, for example, metal cans for food and beverages.

**Claims**

1.   A crystalline polyester resin containing a polycarboxylic acid component and a polyalcohol component as copolymerization components, wherein the crystalline polyester resin contains 4 to 48 mol% of orthophthalic acid as the polycarboxylic acid component, and 48 mol% or more of 1,4-butanediol and less than 40 mol% of ethylene glycol as the polyalcohol component, and wherein the crystalline polyester resin has a melting point of 120 to 160°C.

2.   The crystalline polyester resin according to claim 1, wherein when values of copolymerization proportions (mol%) of components are plugged into a formula described below, provided that each of a total of the polycarboxylic acid component and a total of the polyalcohol component is defined as 100 mol%, a value of the formula is 95 mol% or more and less than 140 mol%.

(1,4-butanediol + component (a)) - (orthophthalic acid + component (b) + component (c))                    Formula:

      (wherein, the component (a) is a dicarboxylic acid having a ring structure, and having a carboxylic acid group at para positions when the ring is a benzene ring, at 2,6-positions when the ring is a naphthalene ring, and at 1,4-positions when the ring is a cyclohexyl ring,
      the component (b) is a dicarboxylic acid, except for the component (a), having a ring structure, and
      the component (c) is an aliphatic polyalcohol having a side chain, and
      the components (a), (b), and (c) are each an optional component.)

3.   A coating composition containing the crystalline polyester resin according to claim 1 or 2, wherein the coating composition has a content of a curing agent of less than 1 part by mass, relative to 100 parts by mass (solid content) of the crystalline polyester resin.

4.   A coating film containing the crystalline polyester resin according to claim 1 or 2.

5.   A metal can having the coating film according to claim 4.

## INTERNATIONAL SEARCH REPORT

| International application No. |
| --- |
| **PCT/JP2023/045868** |

| A. | CLASSIFICATION OF SUBJECT MATTER |
| --- | --- |

*C08G 63/181*(2006.01)i; *B65D 23/08*(2006.01)i; *C09D 167/02*(2006.01)i
FI:   C08G63/181; C09D167/02; B65D23/08 Z

According to International Patent Classification (IPC) or to both national classification and IPC

| B. | FIELDS SEARCHED |
| --- | --- |

Minimum documentation searched (classification system followed by classification symbols)

C08G63/181; B65D23/08; C09D167/02

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | JP 59-78234 A (TOYO SEIKAN KAISHA LTD) 07 May 1984 (1984-05-07)<br>claims, p. 2, lower left column, line 5 to p. 5, lower left column, line 15, p. 5, lower right column, lines 8-20, p. 7, upper left column, line 8 to p. 14, upper left column, line 5 | 1-5 |
| X | JP 9-12998 A (THE NIPPON SYNTHETIC CHEMICAL INDUSTRY CO., LTD.) 14 January 1997 (1997-01-14)<br>claims, paragraphs [0006], [0009]-[0010], [0013]-[0027] | 1-5 |
| X | JP 2016-155984 A (HITACHI CHEMICAL COMPANY, LTD.) 01 September 2016 (2016-09-01)<br>paragraphs [0001], [0027]-[0040] | 1, 4-5 |
| A | US 3515628 A (EASTMAN KODAK CO.) 02 June 1970 (1970-06-02)<br>entire text | 1-5 |
| A | JP 4-211433 A (POLYPLASTICS CO., LTD.) 03 August 1992 (1992-08-03)<br>entire text | 1-5 |

☑ Further documents are listed in the continuation of Box C.     ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **07 February 2024** | **20 February 2024** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**

| International application No. |
| --- |
| **PCT/JP2023/045868** |

**C.    DOCUMENTS CONSIDERED TO BE RELEVANT**

| Category* | Citation of document, with indication, where appropriate, of the relevant passages | Relevant to claim No. |
| --- | --- | --- |
| A | JP 4-33921 A (DAI ICHI KOGYO SEIYAKU CO., LTD.) 05 February 1992 (1992-02-05)<br>entire text | 1-5 |
| A | JP 2008-501048 A (BASF AG) 17 January 2008 (2008-01-17)<br>entire text | 1-5 |
| A | JP 64-11166 A (TOYO BOSEKI KABUSHIKI KAISHA) 13 January 1989 (1989-01-13)<br>entire text | 1-5 |

Form PCT/ISA/210 (second sheet) (July 2022)

**INTERNATIONAL SEARCH REPORT**
Information on patent family members

International application No.

**PCT/JP2023/045868**

| Patent document cited in search report | | | Publication date (day/month/year) | Patent family member(s) | | | Publication date (day/month/year) |
|---|---|---|---|---|---|---|---|
| JP | 59-78234 | A | 07 May 1984 | US | 4500575 | A | |
| | | | | claims, column 2, line 21 to column 6, line 63, column 7, lines 10-25, column 8, line 57 to column 22, line 39 | | | |
| JP | 9-12998 | A | 14 January 1997 | (Family: none) | | | |
| JP | 2016-155984 | A | 01 September 2016 | (Family: none) | | | |
| US | 3515628 | A | 02 June 1970 | (Family: none) | | | |
| JP | 4-211433 | A | 03 August 1992 | (Family: none) | | | |
| JP | 4-33921 | A | 05 February 1992 | (Family: none) | | | |
| JP | 2008-501048 | A | 17 January 2008 | US | 2009/0281271 | A1 | |
| | | | | entire text | | | |
| | | | | WO | 2005/118677 | A1 | |
| | | | | EP | 1756197 | A1 | |
| | | | | CN | 1961023 | A | |
| JP | 64-11166 | A | 13 January 1989 | (Family: none) | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• JP 2001234115 A